# FASCICULE DE BREVET EUROPEEN

(11) **EP 2 284 064 B1**
(45) Date de publication et mention de la délivrance du brevet: **04.04.2012**
(21) Numéro de dépôt: 10013753.8
(22) Date de dépôt: 13.05.2009
(51) Int. Cl.: B62D 11/00, B62D 5/00, B62D 7/22

(54) **Dispositif de commande d'une direction active**
Vorrichtung zur Steuerung einer aktiven Lenkung
Device for controlling an active steering system

(30) Priorité: 23.05.2008 FR 0802879
(43) Date de publication de la demande: 16.02.2011
(62) Demande divisionnaire de: 09290354.1
(73) Titulaire: NEXTER Systems, 42328 Roanne (FR)
(72) Inventeur: Le Trouher, Guy, 18023 Bourges Cedex (FR); Pape, Olivier, 18023 Bourges Cedex (FR); Bourdet, Jean-Marie, 18023 Bourges Cedex (FR)
(74) Mandataire: Célanie, Christian

(56) Documents cités:
- EP-A- 1 548 411
- WO-A-2005/100130
- DE-A1-102005 007 307
- US-B2- 7 063 636

## Description

Le domaine technique de l'invention est celui des dispositifs permettant la commande d'une direction active.

Les directions actives sont des organes de conduite d'un véhicule qui permettent de corriger un ordre de braquage apporté par le conducteur lorsque cet ordre risque de compromettre la stabilité du véhicule.

On connaît ainsi par le brevet FR-2681449 un dispositif selon le préambule de la revendication 1, dans lequel un calculateur évalue à partir d'une mesure de la vitesse angulaire de lacet une consigne de survirage potentielle et il détermine une consigne de contre braquage qui est appliquée à l'organe de conduite pour corriger le braquage.

Cette correction est le plus souvent apportée au niveau d'un différentiel mécanique. En effet un tel équipement permet de combiner un ordre de consigne donné (par exemple par un volant) avec un ordre de correction donné par un moteur qui est piloté par le calculateur en fonction des mesures de roulis qui sont effectuées.

Le brevet US-7063636 décrit un tel dispositif de direction active dans lequel le volant agit sur une entrée d'un différentiel tandis qu'un moteur électrique de correction de braquage agit sur le porte satellite de ce différentiel.

Avec un tel dispositif le pilotage reste possible, même en cas de défaillance du moteur de correction. Il y a en effet une liaison directe via le différentiel entre le volant et la sortie commandant les roues.

Cependant un tel dispositif est associé à une direction hydraulique assistée qui permet de compenser dans une certaine mesure les chocs ou retour d'efforts qui pourraient être communiqués au volant lors des mises en route du moteur de compensation.

Un tel dispositif de direction assistée n'est pas toujours mis en oeuvre, notamment dans les véhicules à pilotage par ripage ou se dirigeant par ripage, tels que les véhicules chenillés ou à roues non directrices.

En effet, dans ces véhicules la commande de direction est amplifiée à l'aide d'un moyen spécifique qui est le groupe hydrostatique de commande de direction (GHD). Ce moyen est disposé en aval du différentiel de pilotage et il ne peut amortir les chocs provoqués par le moteur de correction de braquage.

Les brevets WO2005/100130, DE102005007307 et EP-1548411 décrivent tous des dispositifs de commande de direction par braquage. Ces dispositifs comprennent également des moyens de direction assistée qui assurent un filtrage des chocs reçus.

L'invention a pour but de proposer un dispositif de commande d'une direction active pour véhicules se dirigeant par ripage et qui permette d'assurer la commande directe de la direction à partir du volant, même en cas de défaillance du moteur de correction.

Le dispositif selon l'invention permet ainsi d'éviter un retour de chocs vers le volant malgré l'absence de mécanisme de direction hydraulique assistée.

L'invention trouve ainsi plus particulièrement application pour la commande en direction des véhicules chenillés ou à roues non directrices

Ainsi, l'invention a pour objet un dispositif de commande d'une direction active d'un véhicule se dirigeant par ripage. La commande de direction d'un tel véhicule se fait non pas par braquage des roues mais en donnant un différentiel de vitesse des roues d'un côté du véhicule par rapport aux roues situées d'un autre côté du véhicule. Le dispositif comprend un différentiel de pilotage qui est interposé entre un volant et un moyen de commande de direction constitué par un groupe hydrostatique de commande de direction, différentiel qui reçoit par ailleurs au niveau d'une première entrée une commande de contre braquage fournie par un moteur de correction de virage, dispositif caractérisé en ce que le volant est relié à une deuxième entrée du différentiel par un moyen anti-retour permettant d'empêcher une remontée d'effort du différentiel vers le volant, le moyen anti-retour comprenant un système vis écrou couplé à un convertisseur de mouvement linéaire/rotatif tel qu'un système bielle manivelle.

Selon une variante de l'invention, le dispositif pourra comprendre un moyen de freinage à manque de courant interposé entre la première entrée et le moteur de correction de virage.

L'invention sera mieux comprise à la lecture de la description qui va suivre de différents modes de réalisation, description faite en référence aux dessins annexés et dans lesquels :
- la figure 1 est un schéma cinématique général d'un dispositif selon l'invention,
- la figure 2 est un schéma simplifié d'un deuxième mode de réalisation de l'invention.

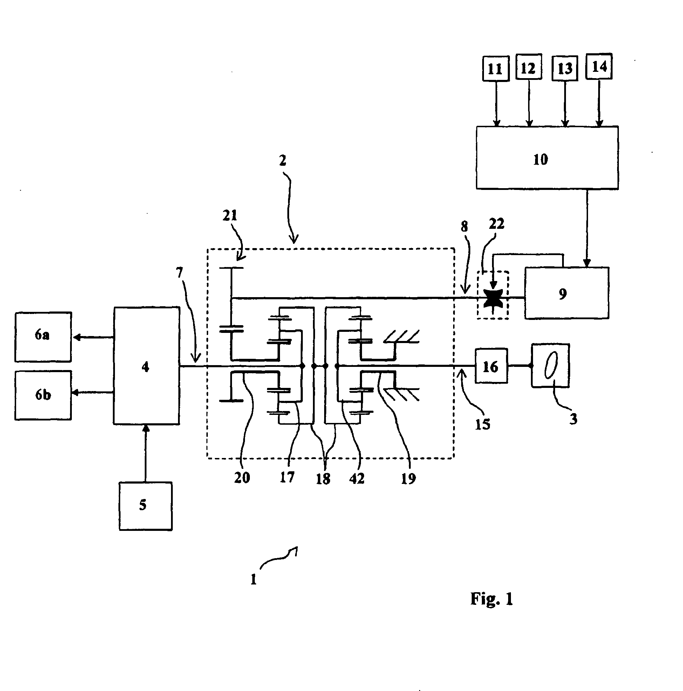

On a représenté sur la figure 1, un dispositif 1 de commande d'une direction active de véhicule selon l'invention.

Ce dispositif comprend un différentiel de pilotage 2 qui est interposé entre un volant 3 et un moyen de commande de direction 4.

Le véhicule considéré est ici un véhicule à direction par ripage (véhicule chenillé ou bien véhicule à roues non directrices). Le moyen de commande de direction 4 est donc un groupe hydrostatique de commande de direction.

Un tel groupe de commande de direction est bien connu. Il utilise la puissance d'un moteur thermique 5 pour gérer le différentiel de vitesse entre une chenille droite 6a et une chenille gauche 6b (ou un train de roues droit et un train de roues gauche pour un véhicule à roues non directrices). La consigne de ripage est fournie par l'arbre de sortie 7 du différentiel de pilotage 2.

Le groupe 4 ne fait pas l'objet de la présente invention et il est donc inutile de le décrire ici en détails.

La consigne de direction fournie par le dispositif 1 est donc utilisée par le groupe 4 pour commander la direction par ripage.

Le différentiel 2 reçoit au niveau d'une première entrée 8 une commande de contre braquage fournie par un moteur 9 de correction de virage. Ce moteur 9 est commandé par un calculateur 10 qui utilise les signaux fournis par des capteurs 11, 12, 13, 14. Ces capteurs pourront comprendre un gyromètre 11 fournissant la vitesse angulaire instantanée du véhicule, et des accéléromètres ou des jauges de contraintes 12,13,19 permettant de mesurer les efforts de réaction exercés par le sol sur les moyens de mobilité (ce qui permettra d'estimer l'adhérence).

Le traitement de ces différents signaux pour en déduire une consigne de contre braquage est décrit par le brevet FR2681449 et il n'est donc pas nécessaire de le décrire ici plus en détails.

Le volant 3 est par ailleurs relié à une deuxième entrée 15 du différentiel 2 par l'intermédiaire d'un moyen anti-retour 16 permettant d'empêcher une remontée d'efforts du différentiel 2 vers le volant 3.

La figure 1 montre l'architecture interne du différentiel 2. On voit que la deuxième entrée 15 est reliée à un premier porte satellites 42 tandis que la sortie 7 est reliée à un deuxième porte satellites 17. Les deux porte satellites engrènent sur la couronne 18 et le rapport de réduction entre l'entrée 15 et la sortie 7 est donc en principe de 1:1 lorsque les deux solaires 19 et 20 sont bloqués.

Le premier solaire 19 est solidaire du carter du différentiel 2.

Le deuxième solaire 20 est entraîné en rotation par le moteur de contre braquage 9 par l'intermédiaire de la première entrée 8 qui est raccordée à un pignon 21 engrenant sur le deuxième solaire 20.

La consigne de braquage qui est donnée par le différentiel 2 est donc une consigne qui est corrigée par le moteur de contre braquage 9 en tenant compte des mesures d'adhérence et de comportement du véhicule qui sont faites à l'aide du calculateur 10 (qui a reçu une programmation appropriée).

On remarque sur la figure 1 qu'un frein 22 est interposé entre le moteur de contre braquage 9 et la première entrée 8.

Ce frein 22 est un frein à manque de courant. Il assure le blocage de la première entrée 8 lorsque le moteur 9 n'est plus alimenté (par exemple comme suite à un incident électrique). Une telle disposition permet d'éviter, en cas de défaillance du moteur 9, que la commande du volant 3 ne provoque le pivotement de l'arbre du moteur 9 plutôt que celui de l'arbre de sortie 7.

Il serait possible à titre de variante de remplacer le frein à manque de courant 22 par un moyen anti-retour tel une liaison vis-écrou.

Conformément à l'invention le volant 3 est donc relié à la deuxième entrée 15 du différentiel 2 par l'intermédiaire du moyen anti-retour 16. Un tel moyen permet d'empêcher une remontée d'efforts du différentiel 2 vers le volant 3.

Une telle remontée d'efforts intervient principalement lors des chocs occasionnés par la mise en action du moteur de contre braquage 9.

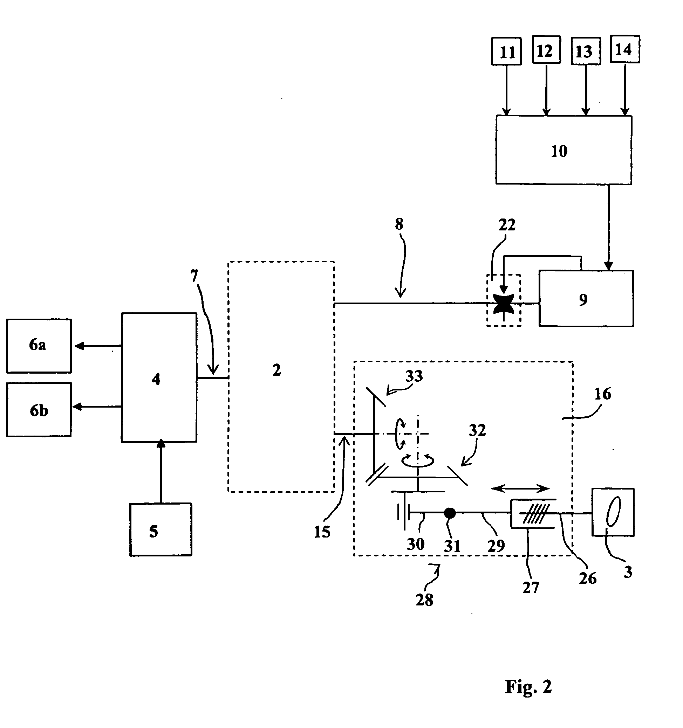

Un mode de réalisation de ces moyens anti-retour va maintenant être décrit en référence à la figure 2.

La figure 2 montre un mode de réalisation dans lequel le moyen anti-retour 16 comprend un système associant une vis 26 solidaire du volant 3 et un écrou 27. L'écrou 27 entraîne un convertisseur de mouvement linéaire/rotatif 28 du type bielle/manivelle.

Ce convertisseur 28 comprend un jeu de biellettes 29, 30, articulées en 31, et faisant pivoter un pignon conique 32. Le pignon conique 32 engrène sur un pignon orthogonal 33 qui est solidaire de la deuxième entrée 15.

Une telle solution permet, sous une forme relativement compacte et présentant des frottements réduits, d'assurer l'anti-retour en évitant toute démultiplication.

On aura ainsi aisément un rapport de 1:1 entrée le pivotement du volant 3 et le pivotement de la deuxième entrée 15.

## Revendications

1. Dispositif (1) de commande d'une direction active d'un véhicule se dirigeant par ripage, dispositif comprenant un différentiel de pilotage (2) qui est interposé entre un volant (3) et un moyen (4) de commande de direction constitué par un groupe hydrostatique de commande de direction, différentiel qui reçoit par ailleurs au niveau d'une première entrée (8) une commande de contre braquage fournie par un moteur (9) de correction de virage, dispositif ***caractérisé en* ce que** le volant (3) est relié à une deuxième entrée (15) du différentiel (2) par un moyen anti-retour (16) permettant d'empêcher une remontée d'effort du différentiel (2) vers le volant (3), le moyen anti-retour (16) comprenant un système vis écrou (26, 27) couplé à un convertisseur (28) de mouvement linéaire/rotatif tel qu'un système bielle manivelle.

2. Dispositif de commande d'une direction active selon la revendication 1, **caractérisé en ce qu'**il comprend un moyen de freinage (22) à manque de courant interposé entre la première entrée (8) et le moteur de correction de virage (9) .

## Claims

1. A control device (1) for the active steering of a vehicle by skid driving comprising a driving differential (2) that is positioned between a steering wheel (3) and steering control means (4) made of a hydrostatic steering unit, differential which furthermore receives at a first input (8) a counter-steering command supplied by a turn correction motor (9), **characterised in that** the steering wheel (3) is coupled to a second input (15) of the driving differential (2) by means of a non-return means (16) preventing any force feedback from the differential (2) to the steering wheel (3), the non-return means (16) comprising a screw-nut system (26, 27) coupled with a rotary/linear motion converter (28) such as a crank-connecting rod system.

2. An active steering control device according to Claim 1, **characterised in that** it comprises power cut braking means (22) positioned between the first input (8) and the turn correction motor (9).

## Patentansprüche

1. Vorrichtung (1) zur Steuerung einer aktiven Lenkung eines Fahrzeugs, das durch Rutschen gelenkt wird, wobei die Vorrichtung ein Steuerdifferential (2) umfasst, welches zwischen ein Steuerrad (3) und ein Mittel zur Lenkbetätigung (4), das von einer hydrostatischen Lenksteuergruppe gebildet wird, eingefügt ist, wobei das Differential außerdem im Bereich eines ersten Eingangs (8) einen Gegensteuer-Befehl erhält, der von einem Motor (9) zur Kurvenkorrektur geliefert wird, wobei die Vorrichtung **dadurch gekennzeichnet ist, dass** das Steuerrad (3) mit einem zweiten Eingang (15) des Differentials (2) über ein Rückdrehsicherungsmittel (16) verbunden ist, welches es ermöglicht, einen Anstieg der Beanspruchung des Differentials (2) auf das Steuerrad (3) zu verhindern, wobei das Rückdrehsicherungsmittel (16) ein Spindelsystem (26, 27) umfasst, das an einen Wandler (28) von Linear- in Drehbewegung, wie ein System aus Schubstange und Kurbelwelle, gekoppelt ist.

2. Vorrichtung zur Steuerung einer aktiven Lenkung nach Anspruch 1, **dadurch gekennzeichnet, dass** sie ein Bremsmittel (22) bei Stromausfall umfasst, das zwischen den ersten Eingang (8) und den Motor zur Kurvenkorrektur (9) eingefügt ist.
